# EUROPEAN PATENT APPLICATION

(11) **EP 2 254 309 A1**
(43) Date of publication of application: **24.11.2010**
(21) Application number: 09305463.3
(22) Date of filing: 20.05.2009
(51) Int. Cl.: H04L 29/08

(54) **Method for sending data of a service**

(71) Applicant: Thomson Licensing, 92130 Issy-les-Moulineaux (FR)
(72) Inventor: Song, Jian Ping, 92648 Boulogne cedex (FR); Ma, Xiao Jun, 92648 Boulogne cedex (FR); Xu, Jun, 92648 Boulogne cedex (FR); Chen, Ren Lei, 92648 Boulogne cedex (FR); Xu, Yan, 92648 Boulogne cedex (FR)
(74) Representative: Ruellan-Lemonnier, Brigitte

(57) **Abstract**

It provides a method for sending data of a service in a system. The system comprises a proxy device, to which at least one client device is connected. The method comprises the steps, at said proxy device, of storing relationship information indicating relationship between the at least one client device and at least one service; receiving data of a service, the transmission of which is initiated by a server providing said service, wherein, said service is requested by said proxy device in the name of itself; and sending the data of said service based on said relationship information.

## Description

### Technical Field

The present invention relates to data communication, and more particularly, relates to a method for sending data of a service.

### Background

Push technology, or server push, describes a style of Internet-based communication where the request for a given transaction originates with the publisher or central server. It is contrasted with pull technology, where the request for the transmission of information originates with the receiver or client. Moreover, push technology can also be applied to other types of network, such as intranet etc.

Push services are often based on information preferences, such as a profile, expressed in advance. This is called a publish/subscribe model. A client might subscribe to various information channels, or called push services. Whenever new content is available on one of those channels, the server would push that information out to corresponding clients.

Synchronous conferencing and instant messaging are typical examples of push services. Chat messages and sometimes files are pushed to the user as soon as they are received by the messaging server. Other uses are push enabled web applications including market data distribution (stock tickers), online chat/messaging system (web chat), auctions, online betting and gaming etc.

HTTP server push (also known as HTTP streaming) is a mechanism for sending data from a web server to a web browser. The HTTP server push can be achieved through several mechanisms. Generally after data has been sent to a client, the web server does not terminate a response so as to keep the connection alive. The web server leaves the response open such that if an event is received, such as an event of arrival of new content associated with an information channel, it can be immediately sent to one or multiple clients. Most web servers offer this functionality via Common Gateway Interface (CGI). Another mechanism is related to a special Multipurpose Internet Mail Extensions (MIME) type called multipart/x-mixed-replace, which was introduced by Netscape in 1995. Web browsers would interpret this as a document changing whenever the server intends to push a new content or updated content to the client. It can be applied not only to HTML documents, but also to streaming images in webcam applications.

A pushlet is a technique originally developed for Java web applications, and it can be employed on other web frameworks as well. In this technique, the server takes advantage of persistent HTTP connections and leaves the response perpetually "open" (i.e. it never terminates the response), effectively fooling the browser into continuing in "loading" mode after the initial page load is normally complete. The server then periodically sends snippets of JavaScript to update the content of the page, thereby achieving push functionality. The clients will be automatically notified by new events, which are pushed by the server.

As the number of push services and clients increases, the amount of messages exchanged between servers and clients becomes large.

### SUMMARY

According to an aspect of the present invention, it provides a method for sending data of a service in a system. The system comprises a proxy device, to which at least one client device is connected. The method comprises the steps, at said proxy device, of storing relationship information indicating relationship between the at least one client device and at least one service; receiving data of a service, the transmission of which is initiated by a server providing said service, wherein, said service is requested by said proxy device in the name of itself; and sending the data of said service based on said relationship information.

According to the aspect of the present invention, it reduces the messages exchanged between servers and client devices.

It is to be understood that more aspects and advantages of the invention will be found in the following detailed description of the present invention.

### BRIEF DESCRIPTION OF THE DRAWINGS

The accompanying drawings, which are included to provide a further understanding of the present invention and are incorporated in this application, illustrate embodiment of the present invention together with the description which serves to explain the principle of the present invention. In the drawings:
Fig. 1 is a diagram schematically illustrating a system for providing push services according to an embodiment of the present invention;
Fig. 2 is a block diagram illustrating an exemplary push proxy according to the present embodiment;
Fig. 3 is a flow chart illustrating the proxy function for a subscription request originated from a client according to the present embodiment;
Fig. 4 is a diagram illustrating an example of relationship between push services and clients according to the present embodiment;
Fig. 5 is a flow chart illustrating the proxy function for pushing content according to the present embodiment;
Fig. 6 is a flow chart illustrating a method for sending the received content of a push service to a client according to the present embodiment;
Fig. 7 is a flow chart illustrating the proxy function for an unsubscription request to a push service originated from a client according to the present embodiment.

### DETAILED DESCRIPTION

The embodiment of the present invention will now be described in detail in conjunction with the drawings. In the following description, some detailed descriptions of known functions and configurations may be omitted for clarity and conciseness.

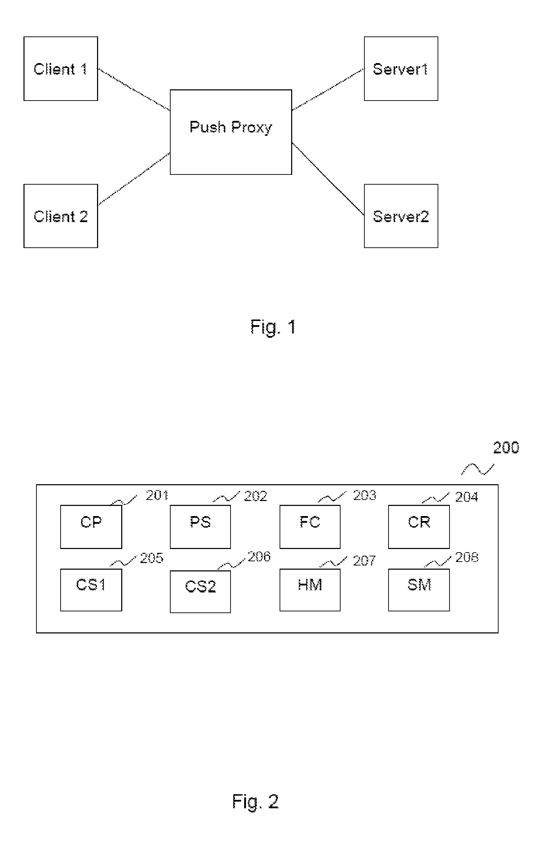

The Fig. 1 is a diagram schematically illustrating a system for providing push services according to an embodiment of the present invention. As an example, the system includes two servers, two clients and a push proxy. The two clients are connected to the push proxy through a first network, and the two servers are connected to the push proxy through a second network. Thus, the push proxy has two sets of IP addresses, i.e. Proxy IP 1 and Proxy IP 2 in the first network and the second network respectively.

The Fig. 2 is a block diagram illustrating an exemplary push proxy according to the present embodiment. The modules described in Fig. 2 are not exhaustive. Moreover, certain modules may be omitted from push proxy for concise description of the present embodiment, with the remaining modules still being able to perform the proxy function for providing push services. The push proxy 200 includes a content push module 201, a push schedule module 202, a flow control module 203, a content reception module 204, a content storage module 205, a client state module 206, a heartbeat management module 207 and a subscription management module 208.
(1) The content reception module 204 is configured to receive contents of push services from servers.
(2) The content push module 201 is configured to send contents to clients.
(3) The content storage module 205 is configured to store data, e.g.
   contents of services. Due to the fact that the client is sometimes offline or in other situations where the client can not be reached, the content of a push service destined to the client can not be delivered by the push proxy at the time when the content is received. In this case, the content of the push service will be stored in the content storage module 205 for a later delivery. In addition, a client subscribing to a push service of, for example, stock quotes may only want to receive the latest quote. As to this kind of push services, the content storage module 205 is further configured to replace the stored content with a recently received content if the stored content is not yet sent to the client when the recent content is received.
(4) The subscription management module 208 is configured to process client's subscription request and unsubscription request. The subscription management module 208 maintains a relationship between push services and clients. As an example, the subscription management module 208 maintains a list of push services that are subscribed by the push proxy. For each push service in the list, all clients subscribing to the push service are recorded. Upon reception of a subscription message requesting for a push service from a client, the subscription management module 208 will terminate the received subscription message and check if the requested push service is within the push service list. If it exists, which means this push service has already been requested by at least one other client, the subscription management module 208 will add an association between the client sending the subscription message and requested push service. Or otherwise, if it does not exist, the subscription management module 208 will send a subscription message requesting for the push service in the name of itself, add the push service information into the push service list and add an association between the client and the requested push service. Upon reception of an unsubscription message for a push service from a client, the subscription management module 208 will terminate the unsubscription message and remove the association between the client and the push service. The subscription management module 208 will further check if no client is associated with the push service. If no client is found to be associated with the push service, the subscription management module 208 will remove the push service from the push service list and send an unsubscription message for the push service in the name of itself.
(5) The client state module 206 is configured to maintain the status of clients that have associations with push services in the push service list. As an example, a client may be in one of the following three states: online, offline and timeout. A client may transit to the state of timeout when the heartbeat request is not received in a predetermined time period. The state may transit from timeout to online when a heartbeat request or an online notification is received from the client.
(6) The flow control module 203 is configured to perform flow control for push services. For example, a client with limited space may be able to receive a certain amount of information. In this case, the client may ask push proxy to stop transmitting data of the push service to the client. Optionally, the flow control module 203 is configured to control the data rate for transmission according to the feedback or instruction of the receiver. In below example, the parameter of 'Window Size' in the response message is used to assist the transmitter on the adjustment of data rate.
(7) The push schedule module 202 is configured to schedule the transmission of contents of push services, which are received from servers, to clients according the status of clients. When a client is not available for receiving the content of its subscribing push service, such as offline or timeout, the push schedule module will store the received content in the content storage module 205. Upon the availability of receiving the content, e.g. the client becomes online, the push schedule module 202 will transmit the stored content to the client accordingly. Furthermore, when the bandwidth is not enough for transmitting content of push services, the push schedule module is further configured to transmit the received content of push services based on the priority information associated with the push service and/or client, i.e. push service having high priority and/or of which recipient client has a high priority is transmitted first. In addition, the expiration date associated with the content of a push service can be considered to schedule the transmission for push services, i.e. discarding the stored content whose associated deadline has expired.
(8) The heartbeat management module 207 is configured to transmit heartbeat requests to servers and receive heartbeat requests from clients. According to the heartbeat protocol, the heartbeat request is transmitted periodically to indicate the aliveness. Therefore, based on the heartbeat requests received from clients, the heartbeat management module 207 updates the status of clients. And the heartbeat management module 207 also sends heartbeat request to inform the server of its aliveness.

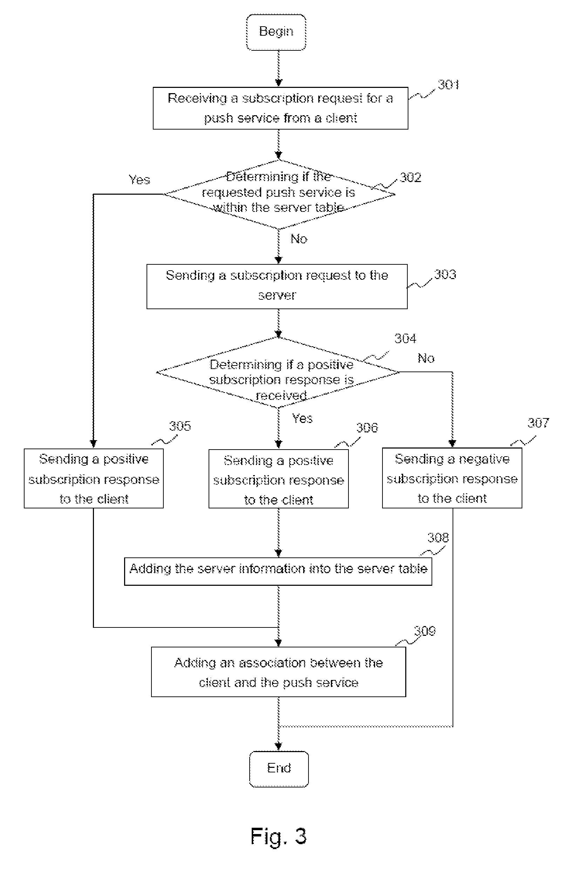

Fig. 3 is a flow chart illustrating a method for a push proxy to provide a proxy function for a subscription request originated from a client according to the present embodiment. As an example, the message encapsulated in data packet adopts the following format. The message used here is application-level packet. It uses the receiver ID/sender ID to identify the final receiver/sender, while TCP packets use (Dst IP, Dst port) / (Src IP, Src port) to identify the receiver/sender in the transport layer.

**Data structure 1: data structure of messages**

| | |
|---|---|
| Dst IP | Dst Port |
| Src IP | Src Port |
| Receiver ID | |
| Sender ID | |
| Message Type | |
| Sequence No. | |
| Message Body | |

Wherein,
--Fields of 'Dst IP' and 'Dst Port' indicate the IP address and port of the destination device to which the message is transmitted;
--Fields of 'Src IP' and 'Src Port' indicate the IP address and port of the source device from which the message is transmitted;
--Fields of 'Receiver ID' and 'Sender ID' indicate the identifiers uniquely identifying the receiver device and the sender device respectively. Normally, the receiver and the sender are of the same devices as destination device and source device respectively. But sometimes, the receiver device may be different from the destination device that is probably an intermediate device;
--Field of 'Message Type' indicates the type of the message;
Field of 'Sequence No.' indicates the sequence number of the message so that the messages with the same receiver, sender and type can be distinguished. Each time a device sends out a request message, it will use the latest value of its Sequence Number, and then the Sequence Number will be updated. However, when a device replies a request message, in the response message, it will use the same 'Sequence No.' as that in the request message;
--Field of 'Message Body' is used to carry the message content and/or additional control information.

In the step 301, the push proxy receives a subscription request for a push service from a client. Below is an example of data structure of a message for the subscription request, it can be seen that the message with the type of subscription request for a push service sent by the client is destined to push proxy other than the corresponding server. The purpose of this message is to request the push proxy with the 'Resource ID' from a server, which is identified by 'Server ID'. Therefore, the combination of 'Server ID' and 'Resource ID' can be used to uniquely identify a push service.

**Data structure 2: subscription request sent by a client**

| | |
|---|---|
| Proxy IP 1 | Proxy Port 1 |
| Client IP | Client Port |
| Server ID | |
| Client ID | |
| Subscription Request | |
| Sequence No. *i* | |
| Resource ID | |

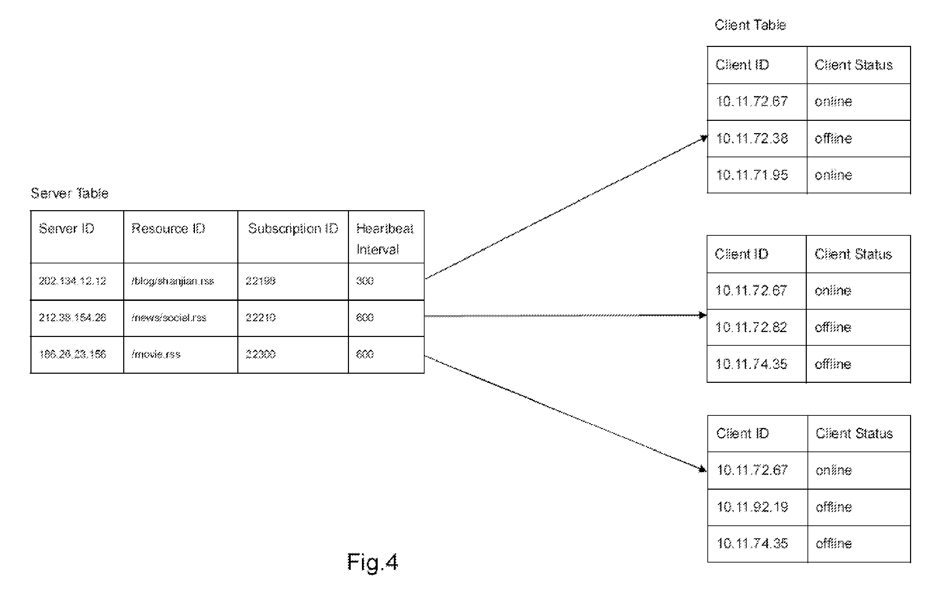

The push proxy itself maintains a database indicating the relationship between push services and subscribing clients. Fig. 4 is a diagram illustrating an example of relationship between push services and clients according to the present embodiment. As shown in the Fig. 4, the push proxy currently maintains information for 3 push services. In the server table,
(1)' Server ID' is an identifier uniquely identifying a server, herein, the IP address is used as the identifier;
(2)' Resource ID' is used to uniquely identify a resource at a server;
(3)' Subscription ID' is generated by the server and can be used to uniquely identify a subscription. Subscriptions of different clients for the same push service have different subscription IDs. However, since the push proxy is the proxy device for all clients and subscribes push services in the name of itself in the present embodiment, subscriptions of different clients for the same push service will considered as one subscription from the server's point of view. Moreover, the subscription ID is unique in a single server, but the same subscription ID can be used by different servers;
(4)' Heartbeat Interval' is used to store the time interval for sending the heartbeat message.

Therefore, the combination of 'Server ID' and 'Resource ID' can uniquely identify a resource in a server, which normally is a push service. In addition, each subscription is associated with a client table in this example. The 'client ID' in the client table is used to uniquely identify a client, and the 'client status' is used to indicate the status of the client. Taking a push service provided by a server with the 'Server ID' of 212.38.154.28 as example, clients subscribing to this push service includes clients with 'client ID' of 10.11.72.67, 10.11.72.82 and 10.11.74.35, and the corresponding statuses are online, offline, offline respectively. Subsequent to the step 301, the push proxy determines if the push service requested by the current client is within the server table in the step 302 by means of, for example, inquiring the server table by using the subscription request.

If it is determined that the requested push service exists in the server table, which means the push service has already been requested by at least one another client before, the push proxy will terminate the subscription request, e.g. discard the subscription request, and send a positive subscription response to the client to inform the acceptance of the subscription request in the step 305. Below is an example of data structure of a message for the subscription response from the push proxy to the client. In the message body, it includes 'Response Code' to indicate the subscription result, e.g., 0 for success and other values for error code. If the subscription is successful, the response will be called positive subscription response, or else it will be called negative subscription response. A positive Subscription Response message body will further include 'Subscription ID' and 'Heartbeat Interval'. The 'Subscription ID' is used to uniquely identify the subscription.

The client will later use the 'Subscription ID' to receive pushed content and to cancel the subscription, and send heartbeat message periodically in an interval indicated by 'Heartbeat Interval'. In addition, the 'Sequence No.' has a same value i as that in Subscription Request message, which indicates this is response message to that request message.

**Data structure 3: subscription response from the push proxy to the client**

| | |
|---|---|
| Client IP | Client Port |
| Proxy IP 1 | Proxy Port 1 |
| Client ID | |
| Server ID | |
| Subscription Response | |
| Sequence No. *i* | |
| Response Code | |
| Subscription ID | |
| Heartbeat Interval | |

If the requested push service is determined not within the server table, the push proxy will terminate the subscription request from the client and send a subscription request for the push service to the server in the name of the push proxy in the step 303, i.e. using the server as the destination device and itself as the source device. In addition, the push proxy may temporarily record the relationship between the client sending the request and the server where the requested push service is located. Below is an example of data structure of a message for the subscription request from the push proxy to the server, the field of 'Sender ID' is filled with the proxy ID that uniquely identifies the push proxy, and the fields of 'Dst IP', 'Dst Port', 'Src IP' and 'Src Port' are filled with Server IP, Server Port, Proxy IP 2 and Proxy Port 2 respectively.

**Data structure 4: subscription request from the push proxy to the server**

| | |
|---|---|
| Server IP | Server Port |
| Proxy IP 2 | Proxy Port 2 |
| Server ID | |
| Proxy ID | |
| Subscription Request | |
| Sequence No. *j* | |
| Resource ID (URL) | |

In the step 304, the push proxy determines if a positive subscription response from the server in response to the subscription request is received.

If no positive subscription response is received, the push proxy will send a negative subscription response to the corresponding client to indicate the error in the step 307.

If a positive subscription response is received, the push proxy will send a positive subscription response to the client in the step 306. Below is an example of the positive response from the server to the push proxy. In the response, the field of 'receiver' is filled with the proxy ID, and the 'heartbeat interval' is used to inform the push proxy of the time interval, according to which the push proxy will send the heartbeat message periodically. Herein, the 'Response Code' and 'Subscription ID' will be further used by the push proxy to respond to the client's success of subscription request.

**Data structure 5: subscription response from the server to the push proxy**

| | |
|---|---|
| Proxy IP 2 | Proxy Port 2 |
| Server IP | Server Port |
| Proxy ID | |
| Server ID | |
| Subscription Response | |
| Sequence No. *j* | |
| Response Code | |
| Subscription ID | |
| Heartbeat Interval | |

In the step 308, the push proxy adds the server information including 'Server ID', 'Resource ID', 'Subscription ID' and 'Heartbeat Interval' into the server table.

In the step 309, the push proxy adds an association between the client and the push service, i.e. adding the client information into a client table that is associated with the server.

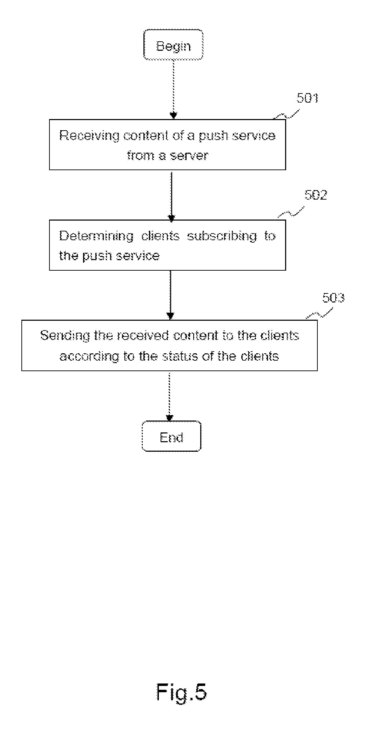

Fig. 5 is a flow chart illustrating the proxy function performed by the push proxy for a push service on pushing the content according to the present embodiment.

In the step 501, the push proxy receives content of a push service from a server. Below is an example of data structure of a message for carrying the content of a push service from the server to the push proxy, the message type of 'Push Request' indicates it's a message used for carrying the content. 'Subscription ID' indicates the push service to which the content belongs, and the content of the push service is indicated by field 'Content'.

**Data structure 6: push content from the server to the push proxy**

| | |
|---|---|
| Proxy IP 2 | Proxy Port 2 |
| Server IP | Server Port |
| Proxy ID | |
| Server ID | |
| Push Request | |
| Sequence No. *k* | |
| Subscription ID | |
| Content | |

In the step 502, the push proxy determines the clients subscribing to the push service whose content is received according to the stored relationship between push services and clients. Herein, the server table and the client table are used to achieve this purpose, i.e. using the Subscription ID to identify a client table.

In the step 503, the push proxy sends the received content to the determined clients according to the status of the clients. The status of a client can be derived from the client table, wherein a column of 'client status' is used to record the status of clients.

In addition, in response to the reception of the content, the push proxy may send back a push response to the server. Below is an example of data structure of a message for the push response from the push proxy to the server, 'Response Code' is used to indicate the receiving result, e.g., 0 for successful and other values for error code; 'Window Size' is used to tell the server how much data the push proxy can receive in next Push Request message, which assists the server to adjust the data rate for transmission.

**Data structure 7: push response from the push proxy to the server**

| | |
|---|---|
| Server IP | Server Port |
| Proxy IP 2 | Proxy Port 2 |
| Server ID | |
| Proxy ID | |
| Push Response | |
| Sequence No. *k* | |
| Response Code | |
| Window Size 1 | |

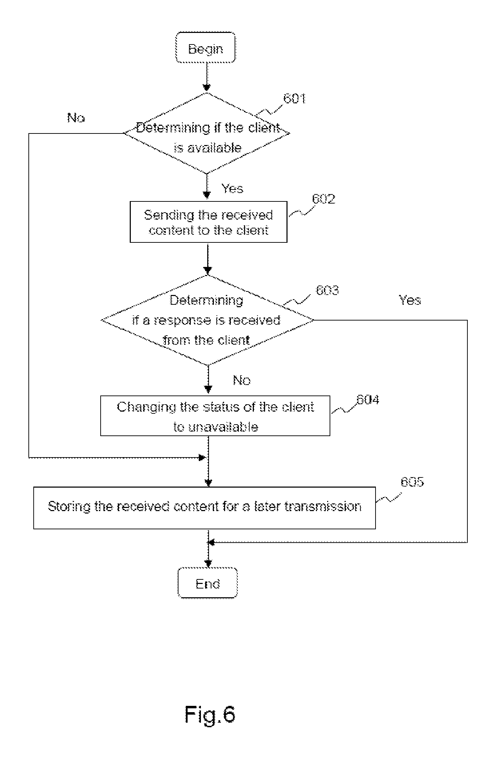

The Fig. 6 is a flow chart illustrating a method for sending the received content of a push service to a client according to the present embodiment.

In the step 601, the push proxy determines if the client is available, e.g. according to the client table. Herein, availability of a client includes state of online while unavailability includes states of offline and timeout. Of course, other states corresponding to availability or unavailability can be introduced, such as state of 'busy'.

If the client is available, the push proxy will send the received content of the push service to the client in the step 602. Below is an example of data structure of a message for the push content from the push proxy to the client,

**Data structure 8: push content from the push proxy to the client**

| | |
|---|---|
| Client IP | Client Port |
| Proxy IP 1 | Proxy Port 1 |
| Client ID | |
| Server ID | |
| Push Request | |
| Sequence No. *x* | |
| Subscription ID | |
| Content | |

If the client is unavailable, it goes to the step 605.

After sending the received content, the push proxy further determines if a response to the transmission of received content from the client is received in the step 603. The response is used by the client to acknowledge the receipt of the content of the push service. Below is an example of the data structure of a message of a push response from the client to the push proxy,

**Data structure 9: push response from the client to the push proxy**

| | |
|---|---|
| Proxy IP 1 | Proxy Port 1 |
| Client IP | Client Port |
| Server ID | |
| Client ID | |
| Push Response | |
| Sequence No. *x* | |
| Response Code | |
| Window Size 2 | |

If no response is received after a predetermined time period, the push proxy will change the status of the client in the client table into unavailability in the step 604, herein, it's recorded as offline.

In the step 605, the push proxy stores the received content of the push service for a later transmission to the client. For example, the stored content may be scheduled to send to the client in a predetermined time interval periodically, or sends to the client once the status of the client in the client table becomes available. Below is an example of the stored content table, the field of "received time' indicates the time when the content is received by the push proxy; the field of "priority" indicates the priority for the corresponding stored content; the Subscription ID is used together with the Server ID to indicates the push service because different servers may generate Subscription IDs having the identical value; the field of "content pointer" is a pointer indicating where the stored content can be retrieved; the field of "client list" indicates the client(s) needed to be sent to for the stored content.

**Data structure 10: stored content table**

| Received Time | Priority | Server ID | Subscription ID | Content Pointer | Client List |
|---|---|---|---|---|---|
| 09/02/09 | | | | | 10.11.72.38, |
| 08:28 | 5 | 202.134.12.12 | 22198 | 80XXXXXX | 10.11.70.22 |
| 09/02/10 | | | | | |
| 10:32 | 4 | 186.26.23.156 | 22300 | 81XXXXXX | 10.11.72.38 |

In addition, a priority may be attached to the client so that the stored content may depend on it for content delivery. Moreover, expiration information for a content indicating when the content will expire may be added. Furthermore, the stored content may be replaced by later received content for some push services.

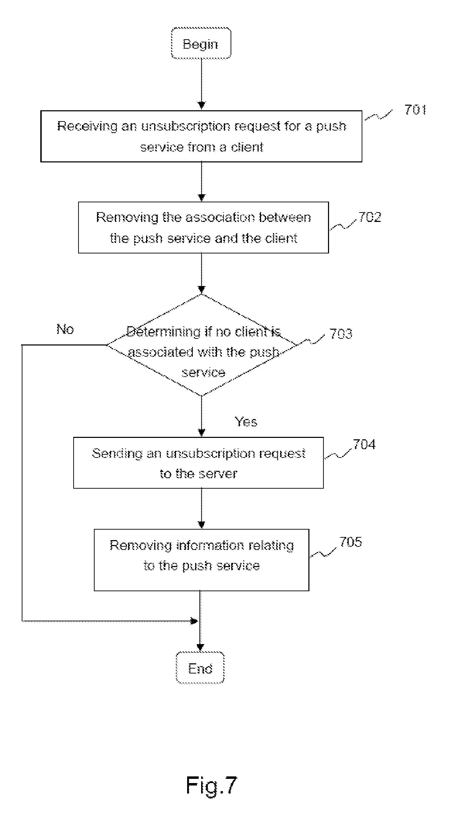

Figure 7 is a flow chart illustrating the proxy function performed for an unsubscription request to a push service originated from a client according to the present embodiment.

In the step 701, the push proxy receives an unsubscription request for a push service from a client. Below is an example of the unsubscription request from the client to the push proxy. The field of "subscription ID" is used together with the Server ID to identify the push service to which the client intends to unsubscribe.

**Data structure 11: unsubscription request from the client to the push proxy**

| | |
|---|---|
| Proxy IP1 | Proxy Port1 |
| Client IP | Client Port |
| Server ID | |
| Client ID | |
| Unsubscription Request | |
| Sequence No. *y* | |
| Subscription ID | |

In the step 702, the push proxy removes the association between the push service and the client. Herein, the push proxy removes the client sending the unsubscription request from the client table;

In the step 703, the push proxy determines if there is no client associated with the push service, e.g. by checking the server table and the client table;

If no client exists associated with the push service, the push proxy will send an unsubscription request to the server in the name of itself in the step 704. Below is an example of the unsubscription request from the push proxy to the server,

**Data structure 12: unsubscription request from the push proxy to the server**

| | |
|---|---|
| Server IP | Server Port |
| Proxy IP 2 | Proxy Port 2 |
| Server ID | |
| Proxy ID | |
| Unsubscription Request | |
| Sequence No. *z* | |
| Subscription ID | |

In the step 705, the push proxy removes information relating to the push service from the database. In the example, the push proxy removes the record corresponding to the server providing the push service from the server table.

In addition, in response to the unsubscription request from the push proxy to the server, the server will send an unsubscription response to the push proxy. Below is an example of data structure of a message for the unsubscription response from the server to the push proxy,

**Data structure 13: unsubscription response from the server to the push proxy**

| | |
|---|---|
| Proxy IP 2 | Proxy Port 2 |
| Server IP | Server Port |
| Proxy ID | |
| Server ID | |
| Unsubscription Response | |
| Sequence No. *z* | |
| Response Code | |

Moreover, in response to the unsubscription request from the client to the push proxy, the push proxy will send an unsubscription response to the client. Below is an example of data structure of a message for the unsubscription response from the push proxy to the client,

**Data structure 14: unsubscription response from the push proxy to the client**

| | |
|---|---|
| Client IP | Client Port |
| Proxy IP1 | Proxy Port1 |
| Client ID | |
| Server ID | |
| Unsubscription | |
| Response | |
| Sequence No. *y* | |
| Response Code | |

Since the push proxy works as an agent for clients before the server, i.e. the push proxy uses its IP address and identifier to subscribe or unsubscribe to a push service, the message exchanges between clients and servers will be significantly decreased especially when lots of clients are subscribing to a push service.

According to a variant of the present embodiment, the destination device of the subscription request/unsubscription request from the client can be the server where the requested push service is stored in the transport layer. The push proxy sniffers and interrupts the subscription/unsubscription request from the client, and sends the corresponding request in the name of the push proxy on behalf of the client.

Currently, many clients access the Internet through NAT (Network Address Translation) technology, which means these clients do not have global IP address. Therefore, the push service can not reach the clients directly. Moreover, the clients are not reachable because of the existence of the firewall in the clients. According to a variant of the present embodiment, the push proxy is deployed into a gateway that is connected to both servers and clients so that the push service can reach the client through the push proxy, and due to the gateway is trusted by the firewall of the client, so the push message will not block by the firewall of the client.

According to an aspect of the present invention, most of the conventional push services require that the connection between client and push server should be persistent (i.e. the push server never terminates the response) so that the push server could push the data of the services to the client. However, in the present embodiment, the connection is not required to be persistent between proxy device and clients. Moreover, it's robust for service delivery because the content is delivery to clients according to their status, i.e. either sending immediately or storing the content for a later transmission.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations shall fall in the scope of the invention.

## Claims

1. A method for sending data of a service in a system, **characterized in that** the system comprises a proxy device, to which at least one client device is connected, the method comprises the steps, at said proxy device, of
storing relationship information indicating relationship between the at least one client device and at least one service;
receiving data of a service, the transmission of which is initiated by a server providing said service, wherein, said service is requested by said proxy device in the name of itself; and
sending the data of said service based on said relationship information.

2. The method of the claim 1, **characterized by** the step of sending further comprising:
determining client devices associated with said service based on said relationship information; and
sending the data of said service to each of determined client devices based on its corresponding status respectively.

3. The method of the claim 2, **characterized in that** if the status of a first client device in said determined client devices indicates available, it further comprising:
sending the data of said service to the first client device;
determining if a response to the sending is received from the first client device; and
if not received, changing the status of the first client device to unavailable and storing the data of said service for a later transmission.

4. The method of the claim 2, **characterized in that** if the status of a second client device in said determined client devices indicates unavailable, it further comprising:
storing the data of said service; and
sending the data of said service to the second client device when the status of said second client device becomes available.

5. The method of the claim 3 or 4, **characterized by** further comprising:
receiving new data of said service whose destination device is said proxy device; and
replacing the stored data of said service with the new data of said service.

6. The method of the claim 1, **characterized by** before receiving the data of said service, it further comprising:
receiving a subscription request for a given service from a third client device;
terminating said subscription request;
determining if said given service has been requested by said proxy device; and
carrying out a proxy function based on the result of determination.

7. The method of the claim 6, **characterized in that** the step of carrying out the proxy function further comprising:
if it's determined said proxy device has requested said given service,
recording the relationship between said third client device and said given service.

8. The method of the claim 6, **characterized in that** the step of carrying out the proxy function further comprising:
if it's determined said proxy device has not requested said given service, sending a subscription request in the name of said proxy device and recording the relationship between said third client device and said given service.

9. The method of the claim 1, **characterized by** further comprising:
receiving an unsubscription request for said service from a fourth client device;
terminating the unsubscription request;
determining if any other client device is associated with said service;
and
carrying out a proxy function based on the result of the determination.

10. The method of the claim 9, **characterized in that** the step of carrying out the proxy function further comprising:
if it's determined no client device is associated with said service,
removing the relationship between said fourth client device and said service and sending an unsubscription request in the name of said proxy device.

11. The method of the claim 9, **characterized in that** the step of carrying out the proxy function further comprising:
if it's determined at least one client device is associated with said service, removing the relationship between said fourth client device and said service.
